# EUROPEAN PATENT SPECIFICATION

(11) **EP 2 481 553 B1**
(45) Date of publication and mention of the grant of the patent: **09.11.2016**
(21) Application number: 11152885.7
(22) Date of filing: 01.02.2011
(51) Int. Cl.: B29C 67/00, B29C 43/00

(54) **Method for manufacturing a chamfered edge and plate shaped object provided with such a chamfered edge**
Verfahren zur Herstellung einer Abschrägung und plattenförmiges Objekt mit solch einer Abschrägung
Procédé de fabrication d'un bord chanfreiné et objet en forme de plaque doté dudit bord chanfreiné

(43) Date of publication of application: 01.08.2012
(73) Proprietor: IVC NV, 8580 Avelgem (BE)
(72) Inventor: Van Vlassenrode, Kristof, B-9800 Deinze (BE); Bossuyt, Filip Gilbert Lucien, B-8580 Avelgem (BE)
(74) Representative: Schacht, Benny Marcel Corneel

(56) References cited:
- EP-A2- 0 323 213
- WO-A2-2007/142706
- US-A- 5 240 751
- US-A1- 2004 219 339

## Description

The invention firstly relates to a method for manufacturing a chamfered edge according to the preamble of claim 1, as is known from US-A-5.240.751. According to this known method the material to be displaced in sideward direction firstly is displaced vertically beyond its original boundaries.

One important field of application of the present method relates to the manufacture of panels for floors, walls or ceilings. The chamfered edge will give the panel a decorative appearance. A known method for manufacturing such a chamfered edge involves the use of mechanical machining tools for removing chips of material at the location of the chamfered edge.

It is an object of the present invention to provide an alternative method of the above type.

Thus, in accordance with the present invention a method is provided for manufacturing a chamfered edge with depth d along at least one edge of an upper surface of a plate shaped object, wherein at least an upper layer of said plate shaped object comprises a thermoplastic (or similar) material, which method comprises the steps of a. heating the plate shaped object near to said edge; b. engaging the respective edge of said upper surface with pressure means for forming said chamfered edge by locally displacing material of the upper layer in a downward direction while displacing a substantially corresponding amount of material of the object in a substantially sideward direction outward of the original boundaries of the object; c. removing the amount of material which has been displaced outward of the original boundaries of the object, characterized in that during step b. counter pressure means engage strategic positions of the plate shaped object for ensuring that said amount of material of the object is correctly displaced in said substantially sideward direction outward of the original boundaries of the object, an optimal result may be achieved.

Preferably, then, said counter pressure means are applied substantially opposite to each other at the upper and lower sides of the plate shaped object. However, depending on the specific features of the method and depending on the properties of the materials of the plate shaped object, the position of said counter pressure means may be altered.

Said counter pressure means may comprise pressure rolls, pressure shoes or alike.

In contrast to manufacturing a chamfered edge using mechanical machining tools, the present method does not involve the removal of chips of material at the location of the chamfered edge, but at a location well below it. At the location of the chamfered edge itself the material of the upper layer is displaced which yields a chamfered edge with a high quality. Displacing the material is possible because the material is thermoplastic (or is a material with similar properties, such as a plastic with a high content of thermoplastics) and is heated before being displaced.

It is noted that in the present invention the use of terms as "upper", "downward" etcetera relates to a horizontal position of the plate shaped object in which the layer which is to be provided with the chamfered edge is positioned at the top. During applying the method it is possible however that the plate shaped object assumes a different position, for example with its "upper layer" at the lower side.

In one embodiment of the method according to the present invention, the plate shaped object comprises an upper layer with a thickness less than d and at least an adjoining layer of a thermoplastic (or similar) material, wherein during step a. at least part of the upper layer and at least part of the adjoining layer are heated and wherein during step b. the upper layer is substantially bent downwardly towards and into the adjoining layer while displacing material of the adjoining layer in said substantially sideward direction.

Referring to a specific example of such a plate shaped object, i.e. a floor product (such as a floor tile or floor plank), the upper layer often is a high performance finishing layer (such as, for example, mainly comprising PVC) which has to provide optical and wear resistant qualities. As a result such an upper layer is very expensive and for reducing its cost its thickness should be limited as far as possible and may be as small as 0,2 mm. When a plate shaped object with such a thin upper finishing layer would be provided with a deeper chamfered edge in a conventional manner (using the above mentioned machining tools) the chamfered edge would extend into the adjoining layer which generally is different from the upper layer and which then would become visible. This would negatively influence the aesthetics of the chamfered edge and performance of the floor product, and in most cases it would require additional finishing steps, such as providing an optical lacquer layer and a layer for protecting the adjoining layer against, for example, humidity. Using the method according to the above embodiment, however, allows to manufacture a chamfered edge with a depth which exceeds the thickness of the upper layer (which may be very thin to reduce the overall cost of the object) without making visible the adjoining layer (which often comprises cheaper materials, such as fillers and recycled materials). The upper layer is bent into the adjoining layer for the creation of the chamfered edge, while at the same time displacing material of said adjoining layer. The displaced material of the adjoining layer will be removed during step c. The final chamfered edge has a perfect appearance with a perfectly shaped continuous outer contour.

It is possible then, that the upper layer has a first glass transition temperature and the adjoining layer has a lower second glass transition temperature, wherein during step a. a heating occurs to at least the second glass transition temperature. As a result during engaging the respective edge of said upper surface with pressure means it is ensured that the material of the adjoining layer will be displaced and that the upper layer only will be bent inward without being displaced in any other manner.

In an alternative embodiment of the method according to the present invention, the plate shaped object comprises an upper layer with a thickness more than d and at least one adjoining layer, wherein during step a. at least part of the upper layer is heated and wherein during step b. material of the upper layer more adjacent the adjoining layer is displaced in said substantially sideward direction.

Such an embodiment is useful when, for example, the adjoining layer is not thermoplastic and comprises, for example, wood, wood like materials, duroplast or duroplast like materials. During carrying out the method this adjoining layer will not deform. However, because the upper layer is sufficiently thick, material of this upper layer near to the adjoining layer may be displaced sidewardly for creating the chamfered edge. During step c. said material originating from the upper edge will be removed.

Among others, the step of heating may occur by infrared heating, by blowing heated air onto the plate shaped object or by positioning a heating member, such as a strip heated to at least 120°C or alike, against the plate shaped object.

It is possible that the pressure means comprise pressure rolls, pressure shoes or alike. Such pressure means will be positioned and shaped for an optimal engagement of the respective edge of the plate shaped object. There may also be provided multiple pressure means for simultaneously engaging several (or opposite) sides of the plate shaped object for the manufacture of two (or more) chamfered edges at the same time.

In a special embodiment of the method the pressure means also act for heating the object. Thus the pressure means may define the sole heating means or may define auxiliary heating means.

Further, in one embodiment, it is possible that the pressure means comprise multiple pressure means with different heating temperatures, for example for gradually heating the respective zone of the plate shaped object.

In an alternative embodiment of the method according to the present invention, after step c. an additional step is carried out of mechanically finishing the chamfered edge. For example it is conceivable that due to material properties (e.g. spring back) of the upper layer the exact manufacture of the chamfered edge solely by the pressure means is not entirely possible and that a final mechanical finishing (such as by milling, grinding, cutting or alike) still will be needed.

The method further may include other steps, such as a final step of cooling the chamfered edge or the additional step of profiling the respective edge of the panel shaped object, for example for manufacturing connecting means.

Preferably all steps are carried out in a continuous manner while transporting the plate shaped object in parallel to its edge which is to be provided with the chamfered edge. As a result a high output may be obtained. It should be noted, however, that the method according to the present invention also may be carried out in a step-by-step fashion.

When the method is carried out in a continuous manner, the plate shaped object may be transported along a processing line by means of conveying means such as a conveyor belt, conveyor chain, drive wheels, rollers or alike engaging surfaces of said plate shaped object. Further, for reducing friction and for avoiding damage to the plate shaped object, it is possible that between said conveying means and the respective surfaces of the plate shaped object a protective air cushion is created, for example by using air nozzles.

The method according to the present invention is particularly suited when the upper layer of the plate shaped object comprises a high content of PVC, for example up to 80% PVC. It should be noted, that the present method also is applicable to objects which only comprise one layer of thermoplastic material, e.g. PVC.

In a second aspect the present invention relates to a plate shaped object with an upper surface provided with a chamfered edge along at least one of the edges of said upper surface, which chamfered edge is manufactured using the method according to the present invention.

Hereinafter the invention will be elucidated while referring to the drawing, in which:
Figure 1 shows part of a cross section of a plate shaped object;
Figures 2-7 show successive stages during carrying out a first embodiment of the method in accordance with the present invention, and
Figure 8 shows one stage during carrying out a second embodiment of the method in accordance with the present invention.

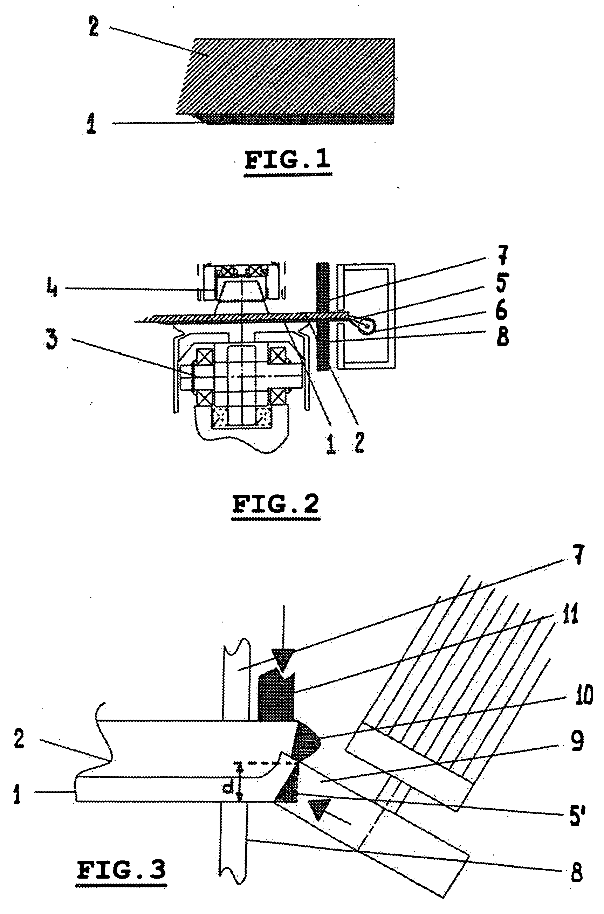

Referring to figure 1 part of a cross section of a plate shaped object is shown on a large scale, for example a floor panel. For providing this floor panel with a chamfered edge it will be positioned upside down (as illustrated in the present embodiment) with an upper layer 1 facing downwards, and an adjoining layer 2 facing upwards. The upper layer, for example, may comprise a high content of PVC and is thermoplastic. The adjoining layer likewise is thermoplastic in this embodiment.

Figure 2 shows how the floor panel 1,2 is transported upside down along a processing line (comprising stations for carrying out the steps described with respect to figures 2-7) by a conveyor which may comprise a lower chain part 3 and an upper belt part 4. Firstly, the conveyor leads one edge 5 of the floor panel (which is to be provided with the chamfered edge) past a heating member, in this embodiment an infrared heater 6. Positioning means 7 and 8 engage opposite sides of the floor panel for positioning it in a right position while carrying out the method.

As a next step, after heating the floor panel according to the step carried out in figure 2, the respective edge 5 of the upper surface of the upper layer 1 of the floor panel is engaged with pressure means 9 for forming the required chamfered edge by locally displacing an amount of material of the upper layer (in figure 3 indicated by the dark area 5') in a upward direction while displacing a substantially corresponding amount of material (indicated in figure 3 by the dark area 10) of the adjoining layer 2 in a substantially sideward direction outward of the original boundaries of the panel. One ore more counter pressure means 11 is/are provided on strategic positions of the floor panel for ensuring that said amount of material 10 of the adjoining layer 2 is correctly displaced in said substantially sideward direction outward of the original boundaries of the panel.

As appears clearly from figure 3, the panel comprises an upper layer 1 with a thickness less than the final depth d of the chamfered edge and an adjoining layer (of a thermoplastic or similar material), wherein during the step of heating at least part of the upper layer 1 and at least part of the adjoining layer 2 are heated. During displacing material the upper layer 1 is substantially bent towards and into the adjoining layer 2 while displacing material (10) of the adjoining layer in said substantially sideward direction.

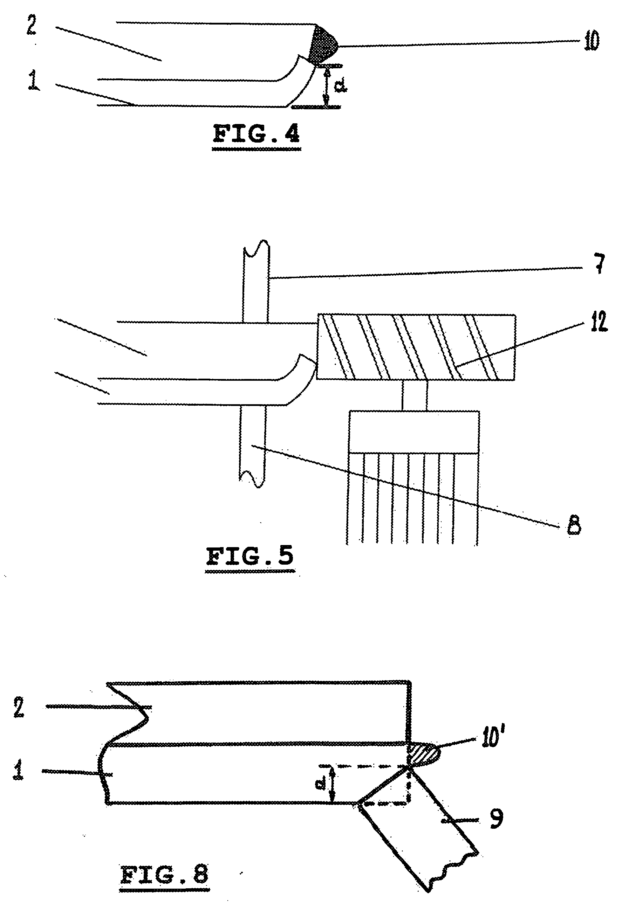

Figure 4 shows the floor panel after the displacement of the material. The chamfered edge with depth d has been formed substantially, but the displaced material 10 of the adjoining layer 2 is still bulging out from the panel.

According to figure 5 the amount of material 10 which has been displaced outward of the original boundaries of the panel is removed mechanically, such as by milling, grinding, cutting or alike using a removal tool 12. During this removal the floor panel still is supported by the positioning means 7,8.

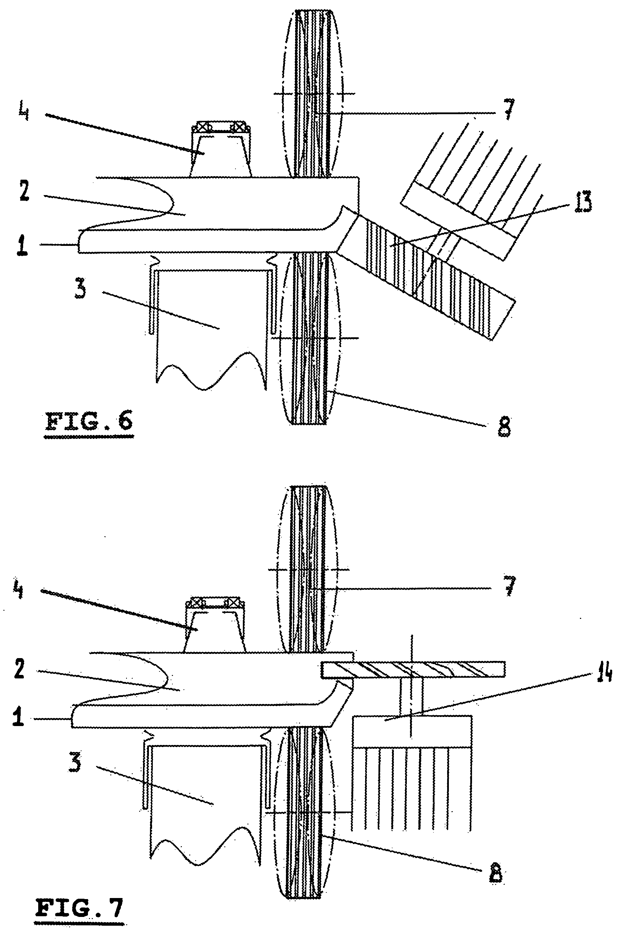

Referring back to figure 4, one can see that the outer surface of the chamfered edge is not completely straight, as may happen due to phenomena such as spring back of the material of the upper layer 1. Thus, if a fully straight outer surface is required, a finishing step of the chamfered edge may be carried out, as represented in figure 6 which shows a machining tool 13 acting on said outer surface.

Figure 7, finally, shows a further tool 14 which will be used for profiling the side of the floor panel, for example for creating a connecting means (such as part of a snap connection).

Figure 8 illustrates part of an alternative embodiment of the method according to the invention which may be used when the plate shaped object comprises an upper layer 1 with a thickness more than d and an adjoining layer 2 which in this case does not need to be thermoplastic. In this embodiment, during heating only part of the upper layer needs to be heated. When engaging the respective edge of the upper surface of the upper layer 1 with a pressure means 9 for forming said chamfered edge, material of the upper layer 1 adjacent the adjoining layer 2 is displaced in said substantially sideward direction and forms an amount of displaced material 10' which thereafter (in correspondence with figure 5) will be removed. The remaining steps are equivalent with the steps described with respect to the embodiment according to figures 1-7.

The invention is not limited to the embodiments described before which may be varied widely within the scope of the invention as defined by the appending claims. Thus it is also possible to provide a chamfered edge in a plate shaped object which comprises only one single thermoplastic layer. Further it is conceivable that more than one chamfered edge is manufactured at the same time, for example at two opposite sides of the object. Finally it is noted that, although the plate shaped object in accordance with the embodiments described before comprises only two layers, such a plate shaped object also may comprise more layers, as is known per se for example in the field of floor products (such as floor tiles or floor planks).

## Claims

1. Method for manufacturing a chamfered edge with depth d along at least one edge (5) of an upper surface of a plate shaped object, wherein at least an upper layer (1) of said plate shaped object comprises a thermoplastic (or similar) material, comprising the steps of
a. heating the plate shaped object near to said edge (5);
b. engaging the respective edge of said upper surface with pressure means (9) for forming said chamfered edge by locally displacing material (5') of the upper layer (1) in a downward direction while displacing a substantially corresponding amount of material (10) of the object in a substantially sideward direction outward of the original boundaries of the object;
c. removing the amount of material (10) which has been displaced outward of the original boundaries of the object,
**characterized in that**
during step b. counter pressure means (11) engage strategic positions of the plate shaped object for ensuring that said amount of material (10) of the object is correctly displaced in said substantially sideward direction outward of the original boundaries of the object.

2. Method according to claim 1, wherein said counter pressure means (11) are applied substantially opposite to each other at the upper and lower sides of the plate shaped object.

3. Method according to claim 1 or 2, wherein said counter pressure means (11) comprise pressure rolls, pressure shoes or alike.

4. Method according to any of the claims 1-3, wherein the plate shaped object comprises an upper layer (1) with a thickness less than d and at least an adjoining layer (2) of a thermoplastic (or similar) material, wherein during step a. at least part of the upper layer (1) and at least part of the adjoining layer (2) are heated and wherein during step b. the upper layer is substantially bent downwardly towards and into the adjoining layer while displacing material of the adjoining layer in said substantially sideward direction.

5. Method according to claim 4, wherein the upper layer (1) has a first glass transition temperature and the adjoining layer (2) has a lower second glass transition temperature and wherein during step a. a heating occurs to at least the second glass transition temperature.

6. Method according to any of the claims 1-3, wherein the plate shaped object comprises an upper layer (1) with a thickness more than d and at least one adjoining layer (2), wherein during step a. at least part of the upper layer is heated and wherein during step b. material of the upper layer more adjacent the adjoining layer is displaced in said substantially sideward direction.

7. Method according to claim 6, wherein the adjoining layer (2) is not thermoplastic and comprises, for example, wood, wood like materials, duroplast or duroplast like materials.

8. Method according to any of the previous claims, wherein the step of heating occurs by infrared heating (6).

9. Method according to any of the claims 1-7, wherein the step of heating occurs by blowing heated air onto the plate shaped object.

10. Method according to any of the claims 1-7, wherein the step of heating occurs by positioning a heating member, such as a strip heated to at least 120°C or alike, against the plate shaped object.

11. Method according to any of the previous claims, wherein the pressure means (9) comprise pressure rolls, pressure shoes or alike.

12. Method according to claim 11, wherein the pressure means (9) also act for heating the object.

13. Method according to claim 12, wherein the pressure means (9) comprise multiple pressure means with different heating temperatures.

14. Method according to any of the previous claims, wherein after step c. an additional step is carried out of mechanically finishing the chamfered edge.

15. Method according to any of the previous claims, wherein step c. is carried out mechanically, such as by milling, grinding, cutting or alike.

16. Method according to any of the previous claims, comprising a final step of cooling the chamfered edge.

17. Method according to any of the previous claims, comprising the additional step of profiling the respective edge of the panel shaped object, for example for manufacturing connecting means.

18. Method according to any of the previous claims, wherein all steps are carried out in a continuous manner while transporting the plate shaped object in parallel to its edge which is to be provided with the chamfered edge.

19. Method according to claim 18, wherein the plate shaped object is transported along a processing line by means of conveying means (3,4) such as a conveyor belt, conveyor chain, drive wheels, rollers or alike engaging surfaces of said plate shaped object.

20. Method according to claim 19, wherein between said conveying means (3,4) and the respective surfaces of the plate shaped object a protective air cushion is created.

21. Method according to any of the previous claims, wherein the upper layer (1) of the plate shaped object comprises a high content of PVC.

22. Plate shaped object with an upper surface provided with a chamfered edge along at least one of the edges of said upper surface, which chamfered edge is manufactured using the method according to any of the previous claims.

## Patentansprüche

1. Verfahren zur Herstellung einer abgeschrägten Kante mit einer Tiefe d entlang mindestens einer Kante (5) einer Oberseite eines plattenförmigen Objekts, wobei mindestens eine obere Schicht (1) besagten plattenförmigen Objekts ein thermoplastisches (oder ähnliches) Material umfasst, umfassend die Schritte des
a. Erwärmens des plattenförmigen Objekts in Nähe der besagten Kante (5);
b. Angreifens mit Druckmitteln (9) an der betreffenden Kante der Oberseite zum Formen der abgeschrägten Kante durch örtliches Verlagern von Material (5') der oberen Schicht (1) in einer Abwärtsrichtung während des Verlagerns einer im Wesentlichen entsprechenden Materialmenge (10) des Objekts in einer im Wesentlichen seitwärts gerichteten Richtung auswärts von den ursprünglichen Abgrenzungen des Objekts;
c. Entfernens der Materialmenge (10), die auswärts von den ursprünglichen Abgrenzungen des Objekts verlagert wurde,
**dadurch gekennzeichnet, dass**
während des Schrittes b. Gegendruckmittel (11) an strategischen Positionen des plattenförmigen Objekts angreifen, um sicherzustellen, dass besagte Materialmenge (10) des Objekts korrekt in der im Wesentlichen seitwärts gerichteten Richtung auswärts von den ursprünglichen Abgrenzungen des Objekts verlagert wird.

2. Verfahren nach Anspruch 1, wobei die Gegendruckmittel (11) im Wesentlichen gegenüber einander an der Ober- und Unterseite des plattenförmigen Objekts angelegt werden.

3. Verfahren nach Anspruch 1 oder 2, wobei die Gegendruckmittel (11) Druckwalzen, Druckschuhe oder dergleichen umfassen.

4. Verfahren nach einem der Ansprüche 1-3, wobei das plattenförmige Objekt eine obere Schicht (1) mit einer Dicke von weniger als d und mindestens eine angrenzende Schicht (2) aus einem thermoplastischen (oder ähnlichen) Material umfasst, wobei während des Schrittes a. mindestens ein Teil der oberen Schicht (1) und mindestens ein Teil der angrenzenden Schicht (2) erwärmt werden und wobei während des Schrittes b. die obere Schicht im Wesentlichen abwärts hin zu der angrenzenden Schicht und in diese gebogen wird, während Material der angrenzenden Schicht in besagter im Wesentlichen seitwärts gerichteter Richtung verlagert wird.

5. Verfahren nach Anspruch 4, wobei die obere Schicht (1) eine erste Glasübergangstemperatur aufweist und die angrenzende Schicht (2) eine niedrigere zweite Glasübergangstemperatur aufweist, und wobei während des Schrittes a. eine Erwärmung bis auf mindestens die zweite Glasübergangstemperatur stattfindet.

6. Verfahren nach einem der Ansprüche 1-3, wobei das plattenförmige Objekt eine obere Schicht (1) mit einer Dicke von mehr als d und mindestens eine angrenzende Schicht (2) umfasst, wobei während des Schrittes a. mindestens ein Teil der oberen Schicht erwärmt wird und wobei während des Schrittes b. Material der oberen Schicht mehr benachbart zu der angrenzenden Schicht in besagter im Wesentlichen seitwärts gerichteter Richtung verlagert wird.

7. Verfahren nach Anspruch 6, wobei die angrenzende Schicht (2) nicht thermoplastisch ist und beispielsweise Holz, holzartige Materialien, Duroplast oder duroplastartige Materialien umfasst.

8. Verfahren nach einem der vorhergehenden Ansprüche, wobei der Schritt des Erwärmens durch Infraroterwärmung (6) geschieht.

9. Verfahren nach einem der Ansprüche 1-7, wobei der Schritt des Erwärmens durch Blasen von erhitzter Luft auf das plattenförmige Objekt geschieht.

10. Verfahren nach einem der Ansprüche 1-7, wobei der Schritt des Erwärmens durch Positionieren eines Heizelements, wie etwa eines auf mindestens 120°C oder dergleichen erhitzten Streifens, gegen das plattenförmige Objekt geschieht.

11. Verfahren nach einem der vorhergehenden Ansprüche, wobei die Druckmittel (9) Druckwalzen, Druckschuhe oder dergleichen umfassen.

12. Verfahren nach Anspruch 11, wobei die Druckmittel (9) auch zum Erwärmen des Objekts dienen.

13. Verfahren nach Anspruch 12, wobei die Druckmittel (9) mehrere Druckmittel mit verschiedenen Erwärmungstemperaturen umfassen.

14. Verfahren nach einem der vorhergehenden Ansprüche, wobei nach Schritt c. ein zusätzlicher Schritt der mechanischen Fertigstellung der abgeschrägten Kante ausgeführt wird.

15. Verfahren nach einem der vorhergehenden Ansprüche, wobei Schritt c. mechanisch ausgeführt wird, wie etwa durch Fräsen, Schleifen, Schneiden oder dergleichen.

16. Verfahren nach einem der vorhergehenden Ansprüche, umfassend einen letzten Schritt des Kühlens der abgeschrägten Kante.

17. Verfahren nach einem der vorhergehenden Ansprüche, umfassend den zusätzlichen Schritt des mit einem Profil Versehens der betreffenden Kante des panelförmigen Objekts, beispielsweise zur Fertigung von Verbindungsmitteln.

18. Verfahren nach einem der vorhergehenden Ansprüche, wobei alle Schritte auf kontinuierliche Weise ausgeführt werden, während das plattenförmige Objekt parallel zu seiner Kante, die mit der abgeschrägten Kante versehen werden soll, befördert wird.

19. Verfahren nach Anspruch 18, wobei das plattenförmige Objekt mittels Fördermitteln (3,4), wie etwa eines Förderbandes, einer Förderkette, Antriebsrädern, Rollen oder dergleichen, die an Oberflächen des plattenförmigen Objekts angreifen, entlang einer Bearbeitungslinie befördert wird.

20. Verfahren nach Anspruch 19, wobei zwischen den Fördermitteln (3, 4) und den betreffenden Oberflächen des plattenförmigen Objekts ein schützendes Luftpolster erzeugt wird.

21. Verfahren nach einem der vorhergehenden Ansprüche, wobei die obere Schicht (1) des plattenförmigen Objekts einen hohen Gehalt an PVC umfasst.

22. Plattenförmiges Objekt mit einer Oberseite, die mit einer abgeschrägten Kante entlang mindestens einer der Kanten besagter Oberseite versehen ist, welche abgeschrägte Kante unter Anwendung des Verfahrens nach einem der vorhergehenden Ansprüche gefertigt ist.

## Revendications

1. Procédé pour la fabrication d'un bord chanfreiné avec une profondeur d le long d'au moins un bord (5) d'une surface supérieure d'un objet en forme de plaque, dans lequel au moins une couche supérieure (1) dudit objet en forme de plaque comprend une matière thermoplastique (ou similaire), comprenant les étapes consistant à :
a. chauffer l'objet en forme de plaque à proximité dudit bord (5) ;
b. mettre le bord respectif de ladite surface supérieure en contact avec un moyen de pression (9) pour former ledit bord chanfreiné via un déplacement local de la matière (5') de la couche supérieure (1) en direction descendante tout en déplaçant une quantité essentiellement correspondante de la matière (10) de l'objet dans une direction essentiellement latérale en dehors des limites initiales de l'objet ;
c. retirer la quantité de matière (10) qui a été déplacée en dehors des limites initiales de l'objet ;
**caractérisé en ce que** au cours de l'étape b, on met des moyens de contrepression (11) en contact avec des positions stratégiques de l'objet en forme de plaque afin de garantir un déplacement correct de ladite quantité de matière (10) de l'objet dans ladite direction essentiellement latérale en dehors des limites initiales de l'objet.

2. Procédé selon la revendication 1, dans lequel on applique lesdits moyens de contrepression (11) essentiellement à l'opposé l'un de l'autre sur les côtés supérieur et inférieur de l'objet en forme de plaque.

3. Procédé selon la revendication 1 ou 2, dans lequel lesdits moyens de contrepression (11) comprennent des rouleaux de pression, des sabots de pression ou analogue.

4. Procédé selon l'une quelconque des revendications 1 à 3, dans lequel l'objet en forme de plaque comprend une couche supérieure (1) dont l'épaisseur est inférieure à d et au moins une couche contiguë (2) d'une matière thermoplastique (ou similaire), dans lequel, au cours de l'étape a, on chauffe au moins une partie de la couche supérieure (1) et au moins une partie de la couche contiguë (2), et dans lequel, au cours de l'étape b, on incurve la couche supérieure essentiellement vers le bas en direction de la couche contiguë et jusque dans cette dernière tout en déplaçant de la matière de la couche contiguë dans ladite direction essentiellement latérale.

5. Procédé selon la revendication 4, dans lequel la couche supérieure (1) possède une première température de transition vitreuse et la couche contiguë (2) possède une deuxième température de transition vitreuse, et dans lequel, au cours de l'étape a, un chauffage est mis en oeuvre jusqu'à au moins la deuxième température de transition vitreuse.

6. Procédé selon l'une quelconque des revendications 1 à 3, dans lequel l'objet en forme de plaques comprend une couche supérieure (1) dont l'épaisseur est supérieure à d et au moins une couche contiguë (2), dans lequel, au cours de l'étape a, on chauffe au moins une partie de la couche supérieure, et dans lequel, au cours de l'étape b, on déplace de la matière de la couche supérieure plus adjacente à la couche contiguë dans ladite direction essentiellement latérale.

7. Procédé selon la revendication 6, dans lequel la couche contiguë (2) n'est pas thermoplastique et comprend par exemple du bois, des matières analogues du bois, une matière duroplastique ou des matières analogues à une matière duroplastique.

8. Procédé selon l'une quelconque des revendications précédentes, dans lequel l'étape de chauffage est mise en oeuvre via un chauffage par rayonnement infrarouge (6).

9. Procédé selon l'une quelconque des revendications 1 à 7, dans lequel l'étape de chauffage est mise en oeuvre en insufflant de l'air chauffé sur l'objet en forme de plaque.

10. Procédé selon l'une quelconque des revendications 1 à 7, dans lequel l'étape de chauffage est mise en oeuvre en positionnant un élément chauffant, tel qu'une bande chauffée jusqu'à au moins 120 °C ou analogue, contre l'objet en forme de plaque.

11. Procédé selon l'une quelconque des revendications précédentes, dans lequel les moyens de pression (9) comprennent des rouleaux de pression, des sabots de pression ou analogue.

12. Procédé selon la revendication 11, dans lequel les moyens de pression (9) agissent également pour chauffer l'objet.

13. Procédé selon la revendication 12, dans lequel les moyens de pression (9) comprennent un certain nombre de moyens de pression possédant des températures de chauffage différentes.

14. Procédé selon l'une quelconque des revendications précédentes, dans lequel, après l'étape c, on met en oeuvre une étape supplémentaire consistant à soumettre le bord chanfreiné à une finition par voie mécanique.

15. Procédé selon l'une quelconque des revendications précédentes, dans lequel l'étape c. est mise en oeuvre par voie mécanique, par exemple par fraisage, par meulage, par découpe ou analogue.

16. Procédé selon l'une quelconque des revendications précédentes, comprenant une étape finale consistant à refroidir le bord chanfreiné.

17. Procédé selon l'une quelconque des revendications précédentes, comprenant l'étape supplémentaire consistant à profiler le bord respectif de l'objet en forme de panneau, par exemple pour la fabrication de moyens de liaison.

18. Procédé selon l'une quelconque des revendications précédentes, dans lequel toutes les étapes sont mises en oeuvre en continu tout en transportant l'objet en forme de plaque parallèlement au bord qui doit être muni du bord chanfreiné.

19. Procédé selon la revendication 18, dans lequel l'objet en forme de plaque est transporté le long d'une ligne de traitement en utilisant un moyen de transport (3, 4) tel qu'une courroie transporteuse, une chaîne transporteuse, des roues d'entraînement, des rouleaux ou analogue, qui entrent en contact avec des surfaces dudit objet en forme de plaque.

20. Procédé selon la revendication 19, dans lequel entre lesdits moyens de transport (3, 4) et les surfaces respectives de l'objet en forme de plaque, on crée un coussin d'air de protection.

21. Procédé selon l'une quelconque des revendications précédentes, dans lequel la couche supérieure (1) de l'objet en forme de plaque possède une teneur élevée en PVC.

22. Objet en forme de plaque comprenant une surface supérieure munie d'un bord chanfreiné le long d'au moins un des bords de ladite surface supérieure, ledit bord chanfreiné étant réalisé en utilisant le procédé selon l'une quelconque des revendications précédentes.
